# EUROPÄISCHE PATENTSCHRIFT

(11) **EP 1 238 913 B1**
(45) Veröffentlichungstag und Bekanntmachung des Hinweises auf die Patenterteilung: **19.07.2006**
(21) Anmeldenummer: 02004893.0
(22) Anmeldetag: 04.03.2002
(51) Int. Cl.: B65D 5/36

(54) **Behälter aus thermoplastischem Material und Herstellung desselben**
Thermoplastic container and method of manufacturing the same
Récipient en matière thermoplastique et procédé de fabrication

(30) Priorität: 06.03.2001 IT RM000117
(43) Veröffentlichungstag der Anmeldung: 11.09.2002
(73) Patentinhaber: Karton S.p.A., 33077 Sacile (PN) (IT)
(72) Erfinder: Bressan, Roberto, 33077 Sacile PN (IT)
(74) Vertreter: Geyer, Fehners & Partner

(56) Entgegenhaltungen:
- EP-A- 0 748 749
- US-A- 3 366 308
- US-A- 4 981 254
- US-A- 6 019 277

## Beschreibung

Die Erfindung bezieht sich auf einen Behälter gemäß dem Oberbegriff des Anspruchs 1. Ein solcher Behälter aus Material mit vorzugsweise wabenartig strukturierten Wänden ist insbesondere, aber nicht ausschließlich für den Transport von Materialien verwendbar ist, die von der Umwelt abzusondern sind, und für die anschließende Entsorgung der Materialien. Insbesondere kann es sich um Krankenhausabfälle und somit um beispielsweise infektiöse Stoffe handeln, die mit Vorsicht zu behandeln sind, und, sobald sie einmal in den Behälter eingefüllt sind, zur Verbrennung zusammen mit dem Behälter bestimmt sind. Die Erfindung bezieht sich auch auf ein Herstellverfahren gemäß dem Oberbegriff des Ansprüches 7 zur Herstellung solcher Behälter.

Behälter gemäß dem Oberbefriff des Anspruchs 1 bzw. Herstellverfahren gemäß dem Oberbegriff des Anspruchs 7 sind z.B. aus der US-A-6019277 bekannt.

Die Erfindung betrifft insbesondere die Herstellung eines Behälters vorzugsweise aus Stegplattenpropylen, ausgehend von einem Zuschnitt, der Stanz- und Falzlinien aufweist.

Bekannt sind verschiedene Arten von Behältern aus Stegplattenpropylen, die für die oben erwähnten Ziele geeignet sind. Ein solcher Behälter ist z.B. in einem Gebrauchsmuster der Anmelderin beschrieben. Er weist eine T-förmige Schweißlinie an seinen Seitenwänden auf, die Schweißlinien sind jedoch erst ab einer Höhe A vom Boden des Behälters aus vorhanden. Dies gewährleistet die größte Dichtigkeit des Behälters in Bodennähe. Außerdem dienen einige Falzlinien auf dem Zuschnitt dazu, den Behälter zusammenklappen zu können, um während des Transports den Raumbedarf auf ein Mindestmaß zu beschränken.

Ein Nachteil dieser Behälterart ist jedoch, daß die Fertigungszeit in der Fertigungsstraße ausgehend von der ebenen Wabenpropylen-Platte mit Stanz- und Falzlinien ziemlich lang ist. Dies ist vor allem auf die für die T-förmige Schweißung erforderliche Zeit zurückzuführen, die durch beheizte und teflonbeschichtete oder mit einem anderen Antihaftmaterial beschichtete Klingen durchgeführt wird. Um die Aufheizzeit der Klingen aus rostfreiem Stahl, die das Polypropylenmaterial zum Schmelzen bringen, zu verkürzen, haben diese eine sehr geringe Dicke und sind somit bruchanfällig. Ein Bruch erfordert unerwünschte Wartungsarbeiten. Zusätzlich muß nach dem Anschmelzen auf die zu verschweißenden Ränder ein Kühl- und Druckkörper gedrückt werden, wodurch sich die Schweißzeit auf etwa 30 - 35 Sekunden verlängert.

Die EP-A-0748749 beschreibt einen Behälter, der mittels Wörmeverschweißung hergestellt wird.

Auch wenn der bekannte Behälter unzweifelhafte Vorteile im Hinblick auf seine Verwendung, d.h. seine Funktionsmerkmale, aufwies, ist das Herstellungsverfahren ziemlich langsam, und die entsprechende Anlage erfordert häufige Wartungseingriffe.

Der Erfindung liegt die Aufgabe zugrunde, einen Behälter zu schaffen, der aus einem Zuschnitt aus thermoplastischem Material herstellbar ist, und der insbesondere im Bodenbereich dicht ist, wobei die nötigen Schweißungen einfacher als im Stand der Technik ausführbar sein sollen. Weiter liegt der Erfindung die Aufgabe zugrunde ein Herstellverfahren für einen solchen Behälter anzugeben.

Die Aufgabe wird gelöst durch den in Anspruch 1 definierten Behälter.

Der erfindungsgemäße Behälter ermöglicht ein einfaches Herstellverfahren, ohne daß die eingangs erwähnten schadenanfälligen Schweißvorrichtungen nötig wären. Anders als herkömmliche Behälter, die eine größtmögliche Dichtigkeit im Bodenbereich dadurch gewährleisteten, daß dort gar keine Schweißnaht vorhanden war, weist der Behälter nach .der vorliegenden Erfindung eine Schweißung am Boden auf, die jedoch so ausgeführt wird, daß sie größte Sicherheit der Dichtigkeit gewährleistet, und darüber hinaus in kürzester Zeit und ohne das Erfordernis häufiger Wartungseingriffe erfolgen kann. Die Erfindung versucht also nicht mehr, jegliche Schweißnaht im Bodenbereich möglichst zu vermeiden, um hohe Dichtigkeit zu erreichen, sondern führt die Verschweißung nunmehr so aus, daß trotz Schweißung eine hohe Dichtigkeit gewährleistet ist. Dazu wird am Boden eine Schweißnaht angeordnet, die durch ein Wärmeverschweißen übereinander liegender Schichten des gefalteten Zuschnitts erzeugt wird.

Diese Art der Wärmeverschweißung, bei der mehrere Materialschichten verschweißt werden, ermöglicht eine sehr dichte Schweißnaht. Das Risiko Ausschuß zu produzieren, bei dem die Schweißnaht nicht dicht ist, ist stark minimiert. Durch die Vornahme der Verschweißung beim zusammengelegten Zuschnitt kann der Schweißvorgang von der Stirnseite der Endabschnitte des zusammengelegten Zuschnittes her erfolgen. Damit können einfache apparative Vorrichtungen eingesetzt werden, um die Verschweißung vorzunehmen. Darüber hinaus kann die derart hergestellte Schweißnaht einfach einer Qualitätssicherung unterzogen werden, da eine optische Inspektion möglich ist.

Der erfindungsgemäße Behälter hat weiter den Vorteil, daß er für den Versand in eine günstige Form gebracht werden kann. Durch die quer über den Boden verlaufende Schweißnaht, die bei aufgestelltem Behälter in Form einer Abkantung nach außen vorsteht, ist es möglich, den Behälterboden zusammenzulegen, wodurch der fertige Behälter für den Versand in eine flache Form gebracht werden kann. Dabei sind diesbezüglich zwei Möglichkeiten gegeben: Zum einen kann der Behälter mit der Schweißnaht nach außen weisend zusammengelegt werden; dies ist die Form, die nach Ausführung der Schweißnaht vorliegt. Zum anderen ist es möglich, den Boden derart zu falten, daß die Schweißnaht in den Behälter nach innen geschoben wird. Diese Form erleichtert dem Endverbraucher das Aufstellen des Behälters, da er lediglich in den Behälter hinein langen und den Boden nach unten drücken muß.

Um diese Faltung zu vereinfachen, ist es zweckmäßig an den hälftig eingeschlagenen Seitenwänden entsprechende Falzlinien vorzusehen, die es erleichtern, den Boden in den Behälter eingeschlagen zu falten. Es ist deshalb bevorzugt, daß die zwei beim zusammengelegten Zuschnitt hälftig eingeschlagenen Seitenwände je eine Falzlinie aufweisen, die die Form eines Quadrats haben, daß mit einer Spitze an den streifenförmigen Bereich, an dem die Schweißnaht ausgebildet wird, angrenzt, und dessen Diagonallänge der Breite der eingeschlagenen Seitenwände entspricht. Derartige quadratförmige Falzlinie in der jeweiligen Seitenwand erleichtert dabei nicht nur das Aufstellen bzw. Zusammenlegen sondern fördern auch das Ausbilden eines flachen Bodens, da die beiden auf den streifenförmigen Bereich zulaufenden Kanten des von den Falzlinien gebildeten Quadrates zugleich Linien sind, in denen das Material geknickt wird, wenn der Behälter aus der flachen Form, die er nach Ablauf der Bodenverschweißung hat, in die Form mit ebenem Boden verbracht wird.

Zusätzlich zur Ausbildung der Schweißnaht am Boden an einem unteren Rand des Zuschnittes ist es selbstverständlich erforderlich, die zwei senkrecht dazu liegenden Längskanten oder -ränder des Zuschnittes ebenfalls zu verschweißen. Solche Längsschweißnähte und das Erfordernis deren Ausbildung für einen dichten Behälter sind natürlich dem Fachmann bekannt. Die Längsschweißnaht kann prinzipiell in jeder Seitenwand des Behälters angeordnet sein. Beispielsweise kann sie auch in oder nahe einer Behälterkante liegen. Auch die Art der Längskantenverschweißung kann beliebig gewählt werden. So ist beispielsweise bei Vollmaterial eine Verschweißung aneinanderstoßender Stirnseiten denkbar. Insbesondere bei Stegplattenmaterial ist es jedoch vorteilhaft, wenn der Zuschnitt zwei gegenüberliegende Längsränder aufweist, die zur Herstellung des Behälters miteinander, vorzugsweise unter Überlappung des plattenförmigen Materials, verschweißt sind.

Bei der Verschweißung der aufeinanderliegenden Materialschichten zur Ausbildung der Boden-Schweißnaht sollte zweckmäßigerweise die Dicke der zu verschweißenden Schichten, d.h. die Schichtanzahl, möglichst wenig variieren. Aus diesem Grund ist es, insbesondere bei überlappend verschweißten Längsrändern, zu bevorzugen, wenn die verschweißten Längsränder in einer der beiden Seitenwände liegen, die beim zusammengelegten Zuschnitt aufeinanderliegen und zwischen denen die beiden anderen Seitenwände eingeschlagen sind. Durch geeignete Wahl der Lage der Längskante kann dadurch erreicht werden, daß im zusammengelegten Zuschnitt maximal vier Materialschichten übereinanderliegen.

Je nach Anwendung des erfindungsgemäßen Behälters kann es zweckmäßig sein, entsprechende Verschlußklappen vorzusehen, die ein Verschließen des Behälters ermöglichen. Für solche Zwecke ist es zu bevorzugen, daß der Zuschnitt Bereiche aufweist, die den Endabschnitten, an denen die Wärmeverschweißung erfolgt, gegenüberliegen und als Verschlußklappen des Behälter dienen.

Je nach Verwendung des Behälters, kann es zweckmäßig sein, Tragegriffe vorzusehen. Diese können auf bekannte Weise von Ausschnitten in den Seitenwänden gebildet sein. Bei einem verschlossenen Behälter würde jedoch dadurch die ursprüngliche Dichtigkeit beeinträchtigt. Je nach eingefülltem Gut kann es auch vermeidenswert sein, in den Behälter zu greifen, z.B. wenn scharfkantige Materialien in den Behälter eingefüllt werden. Es ist deshalb für solche Anwendungszwecke vorteilhaft, wenn zwei gegenüberliegende Verschlußklappen Falz- und Stanzlinien aufweisen, die es ermöglichen, die gegenüberliegenden Verschlußklappen zu einem Handgriffpaar zu falten, das über den Behälterrand vorsteht und bei dem jeweils das plattenförmige Material zumindest doppelt liegt. Dadurch werden zwei Vorteile erzielt: Zum einen liegen die Handgriffe nun nicht mehr in der Seitenwand, sondern in einem entsprechend aufgefalteten Teil des Verschlußdeckels, so daß es möglich ist, sie außerhalb des dicht zu umschließenden Behältervolumens anzuordnen. Zum anderen wird durch das doppelt liegende Material eine bessere Stabilität der Handgriffe erreicht; die Gefahr des Ausreißens ist verhindert.

Auch wenn die Behälterwände vorteilhafterweise aus Stegplattenmaterial gefertigt sind, um ohne Reduzierung der Festigkeitseigenschaften die Menge des eingesetzten Materials zu verringern, wird der nachfolgenden Beschreibung zu entnehmen sein, daß der erfindungsgemäße Behälter auch vollwandig ausgebildet sein kann. Zur Vereinfachung wird nachfolgend beispielshalber von einem Behälter mit Wabenstrukturmaterial die Rede sein.

Der Behälter wird dabei erfindungsgemäß aus einer einzigen Platte bzw. einem einzigen Zuschnitt eines thermoplastischen Material mit Wabenstruktur und mit Falz- und Stanzlinien hergestellt, wobei der Zuschnitt vorzugsweise im wesentlichen rechteckige untere und obere Bereiche aufweist, die miteinander an Falzlinien verbunden sind, wobei die rechteckigen unteren und oberen, an den seitlichen Enden des Zuschnitts gelegenen rechteckigen Bereiche verwendet werden, um die Schweißlinie in Längsrichtung zu bilden, nachdem zuvor ihre äußersten Seitenränder zum Überlappen gebracht wurden. Das Paar der weiter innen, an den Seiten der mittleren rechteckigen Bereiche angrenzenden obere und untere rechteckige Bereiche weist in Längsrichtung verlaufende Falzlinien auf, um den Behälter für die Schweißung des Bodens vorzubereiten, und wobei eine waagerechte Falzlinie, die quer über den Zuschnitt verläuft, sowie Paare von quadratisch verlaufenden Falzlinien vorgesehen sind, die es ermöglichen, nach der Bodenverschweißung die dreidimensionale Gestalt des Behälters oder die zum Transport geeignete Gestalt zu erzielen.

Die im wesentlichen rechteckigen oberen Bereiche des Zuschnitts, die seitlich angeordnet sind, weisen oben jeweils eine Zunge auf, die als Anschlag für ein Deckel-Verschlußelement des Behälters dient, das von dem mittleren oberen rechteckigen Bereich gebildet wird. Letzterer weist zwei Laschen auf, die in entsprechende Schlitze längs der waagerechten Falzlinien eingeführt werden, die die oberen und unteren rechteckigen seitlichen Bereiche trennen.

Der Zuschnitt weist vorzugsweise weiter Durchbrüche und waagerechte Falzlinien zur Bildung von Handgriffen auf, um einen bequemen Transport des Behälters zu ermöglichen.

Die Aufgabe wird weiter gelöst durch das in Anspruch 7 definierte Verfahren zur Herstellung eines Behälters

Das erfindungsgemäße Verfahren ermöglicht auf einfache Weise und unter Verzicht auf schadensanfällige Vorrichtungen, den eingangs erwähnten Behälter zu fertigen. Dabei ist durch die Zugänglichkeit der Boden-Schweißnaht von der Stirnseite des zusammengelegten Zuschnittes her, ein einfaches Wärmeverschweißen möglich.

Das erfindungsgemäße Herstellverfahren verringert Wartungseingriffe für die Schweißeinrichtungen auf ein Mindestmaß, insbesondere mit Blick auf die Schweißung des Bodens, wobei zusätzlich die Abwesenheit von Schweißfehlern weitestgehend gewährleistet ist.

Für die Ausführung dieser Boden-Schweißnaht muß das thermoplastische Material bis zur Erweichung erwärmt werden. Es hat sich herausgestellt, daß eine Schweißvorrichtung immer dann anfällig für Ausfälle ist, wenn zur Erwärmung ein Kontakt mit dem zu erwärmenden Material hergestellt werden muß. Es ist deshalb zu bevorzugen, daß der streifenförmige Bereich kontaktlos bis zur Erweichung erhitzt wird. Eine besonders einfache Weise der kontaktlosen Erhitzung erfolgt durch das Anblasen mit Heißluft. Auch können beispielsweise Ultraschall-Schweißvorrichtungen oder Mikrowellenschweißeinrichtungen verwendet werden. Bevorzugt erfolgen die Erwärmungen bei den Schweißungen, d.h. die der Seitenwand und die des Bodens, durch das Anblasen mit Heißluft. Die Verwendung von Heißluft ermöglicht dabei eine einfache und zugleich robuste Vorrichtung. Es ist deshalb zu bevorzugen, daß die Wärmeverschweißung in dem streifenförmigen Bereich mittels Heißluft erfolgt, die auf die offenen Ränder der Endabschnitte bis zur Erweichung geführt wird.

Die Güte der Schweißnaht wird gefördert, wenn das zu verschweißende Material im streifenförmigen Bereich möglichst gleichförmig erwärmt wird. Zugleich sollte eine Erwärmung nicht zu verschweißenden Materials des Zuschnittes ausgeschlossen werden.

Um die Erhitzung möglichst auf den streifenförmigen Bereich zu beschränken, ist es zu bevorzugen, den zusammengelegten Zuschnitt unmittelbar benachbart des streifenförmigen Bereichs einzuspannen, so daß nur dieser Bereich erhitzt wird. Verwendet man zur Erhitzung Heißluft, sollte die Einspannung zugleich eine Abschirmung des übrigen Zuschnittes von der Heißluft bewirken. Die Einspannung erreicht zugleich eine wirksame Fixierung des zusammengelegten Zuschnittes, so daß sich bei der Erhitzung keine Verschiebung der einzelnen Schichten des Zuschnittes einstellen kann. Es ist deshalb bei der Verwendung von Heißluft zu bevorzugen, daß während der Heißluftzufuhr der zusammengelegte Zuschnitt unmittelbar benachbart des streifenförmigen Bereichs eingespannt wird, so daß nur dieser Bereich mit Heißluft beaufschlagt wird. Dadurch kann die Erwärmung gleichmäßig und auf den streifenförmigen Bereich begrenzt erfolgen. Besonders vorteilhaft ist Heißluft bei der Verwendung von Stegplatten-Material, da dann eine besonders gleichförmige Erwärmung des Streifens erreicht werden kann. Die Gefahr, daß durch Überhitzung der Ränder eine Beschädigung des Materials und somit eine erhöhte Ausschußquote bei der Produktion entsteht, ist dadurch merklich gemindert.

Um nach der Erweichung des Materials eine möglichst fehlerlos ausgebildete Schweißnaht zu erhalten, ist es zu bevorzugen, den streifenförmigen Bereich nach der Erweichung zu kühlen und zu pressen.

Erfolgt die Erhitzung mittels Heißluft, ist es aus verfahrenstechnischen Gründen zu bevorzugen, ein solches Heißlufterzeugungsgerät dauerhaft in Betrieb halten zu können. Es ist dafür zu bevorzugen, daß thermoplastische Material von der Heißluft abzuschirmen und nur während der Erhitzung der Heißluft auszusetzen.

Die Herstellung des Behälters aus dem Zuschnitt erfolgt vorzugsweise in einer Anlage zum Falzen und Schweißen in Längsrichtung und aus einer Anlage zum Falzen und Schweißen des Bodens, wobei die Anlage zum Falzen und Schweißen des Bodens eine Vorrichtung zum Schweißen des Bodens enthält, die Heißluft einbläst; diese Vorrichtung weist Press- und Kühlschieber und Halteschieber zum Festhalten des Zuschnitts aus thermoplastischem Material auf, die mit einem Gebläse zusammenwirken, das längs einer zu den Schiebern senkrechten Achse angeordnet ist.

Der Halteschieber weist eine Metallplatte auf, die zusätzlich die Funktion hat, die Erwärmung nur einer begrenzten Zone des faltenbalgartig zusammengelegten Zuschnitts zu ermöglichen und den Wärmeabfluss in anderen Teilen des Zuschnitts zu unterbinden, in denen Wärme für die Schweißung nicht benötigt wird.

Der Press- und Kühlschieber kann sich parallel zum Halteschieber bewegen und weist ebenfalls eine Metallplatte auf. Seine Aufgabe ist es, das thermoplastische Material zu verfestigen und zusammenzudrücken, um die Schweißnaht des Behälterbodens herzustellen. Er ist zwischen dem Gebläse und dem Halteschieber angeordnet.

Das Gebläse zweckmäßigerweise ist auf einem Wagen angebracht und kann sich den Rändern der übereinanderliegenden, miteinander zu verschweißenden Schichten des Zuschnitts nähern oder von diesen entfernen. Wegen seiner thermischen Trägheit arbeitet das Gebläse bevorzugt kontinuierlich; es bewegt sich auf die zu verschweißenden Ränder zu, um den Aufheizzyklus des thermoplastischen Materials zur Verschweißung durchzuführen, danach fährt es sofort zurück, und eine dritte Metallplatte, die nachfolgend als Schutzplatte bezeichnen wird, senkt sich ab, um die beiden Schieber und die Schweißzone vor dem Heißluftstrom des Gebläses zu schützen.

Die Erfindung wird nun anhand der beigefügten Zeichnungen, die beispielhalber eine bevorzugte Ausführungsform des Behälters und einer Fertigungsanlage zu dessen Herstellung zeigen, näher erläutert. In den Zeichnungen, deren Offenbarungsgehalt explizit hier einbezogen wird, zeigen:
Fig. 1 eine Draufsicht auf einen Zuschnitt aus thermoplastischem Stegplatten-Material, die die Anordnung der verschiedenen Falz- und Stanzlinien zeigt;
Fig. 2 eine perspektivische Ansicht des Zuschnitts, der längs zweier in Längsrichtung verlaufender Falzlinien gefalzt ist, nachdem zwei seitliche Ränder zum Überlappen gebracht und miteinander durch Einblasen von Heißluft in Längsrichtung verschweißt worden sind;
Fig. 3 eine perspektivische des Zuschnitts, der ausgehend von der Gestalt in Fig. 2, d.h. nachdem der Zuschnitt bereits eine "röhrenartige" Form angenommen hat, längs aller sechs in Längsrichtung verlaufender Falzlinien faltenbalgartig gefalzt und zusammengelegt ist;
Fig. 4 eine perspektivische Ansicht der wie in Fig. 3 gefalzten Platte, die zur Ausbildung einer auf dem Boden des künftigen Behälters liegenden Schweißnaht durch Einblasen von Heißluft und Druckausübung auf die entsprechenden Teile vorbereitet ist;
Fig. 5 eine perspektivische Ansicht des Behälters in einer Zwischenphase nach der Herstellung der Schweißnaht, wobei nun die Schweißnaht nach innen geschoben wird;
Fig. 6 eine Ansicht des Behälters der in Fig. 5, bei dem die Schweißnaht des Bodens weiter nach innen gedrückt wird und auch zwei auf zwei einander gegenüberliegenden Seitenwänden des Behälters befindliche, in Längsrichtung verlaufende Falzlinien nach innen gedrückt werden;
Fig. 7 eine perspektivische Ansicht des Behälters in Versandform;
Fig. 8 eine Ansicht, die das Aufstellen des Behälters zeigt;
Fig. 9 eine Ansicht, die das Verschließen des Behälters zeigt, das dadurch erfolgt, daß Handgriffe senkrecht gestellt werden und ein oberes Verschlusselement nach unten geklappt wird, bis seine Laschen in entsprechende Schlitze eingreifen;
Fig. 10 eine perspektivische Ansicht einer Falz- und Schweißanlage für den Boden vorarbeitende Einrichtung zum faltenbalgartigen Falzen, um den Zuschnitt der Fig. 2 in die Form der Fig. 3 zu bringen;
Fig. 11 eine perspektivische Ansicht der Einrichtung zum faltenbalgartigen Falzen der Fig. 10 in einer zweiten Arbeitsphase;
Fig. 12 eine axonometrische Ansicht der Vorrichtung nach den Fig. 10 und 11 in einer dritten Arbeitsphase;
Fig. 13 eine erste Arbeitsphase einerVorrichtung zur Schweißung des Bodens, die die Schweißnaht am Boden erzeugt;
Fig. 14 eine zweite Arbeitsphase der Vorrichtung zur Schweißung des Bodens;
Fig. 15 eine dritte Arbeitsphase der Vorrichtung zur Schweißung des Bodens;
Fig. 16 eine vierte Arbeitsphase der Vorrichtung zur Schweißung des Bodens;
Fig. 17 eine fünfte Arbeitsphase der Vorrichtung zur Verschweißung des Bodens, in der die Schweißnaht fertiggestellt ist;
Fig. 18 eine perspektivische Ansicht einer Falzvorrichtung für das Zusammenlegen für den Versand, in der ersten Arbeitsphase;
Fig. 19 eine perspektivische Ansicht der Vorrichtung der FIG.18 in einer zweiten Arbeitsphase;
Fig. 20 eine perspektivische Ansicht der Vorrichtung der FIG.18 in einer dritten Arbeitsphase, und
Fig. 21 eine perspektivische Ansicht der Vorrichtung der FIG. 18 in einer vierten Arbeitsphase, die der Behälter in die Form der Fig. 7 bringt.

In der folgenden Beschreibung einer bevorzugten Ausführungsform entsprechen gleiche Bezugszahlen stets den gleichen von diesen Bezugszahlen in den verschiedenen Figuren bezeichneten Bauteilen.

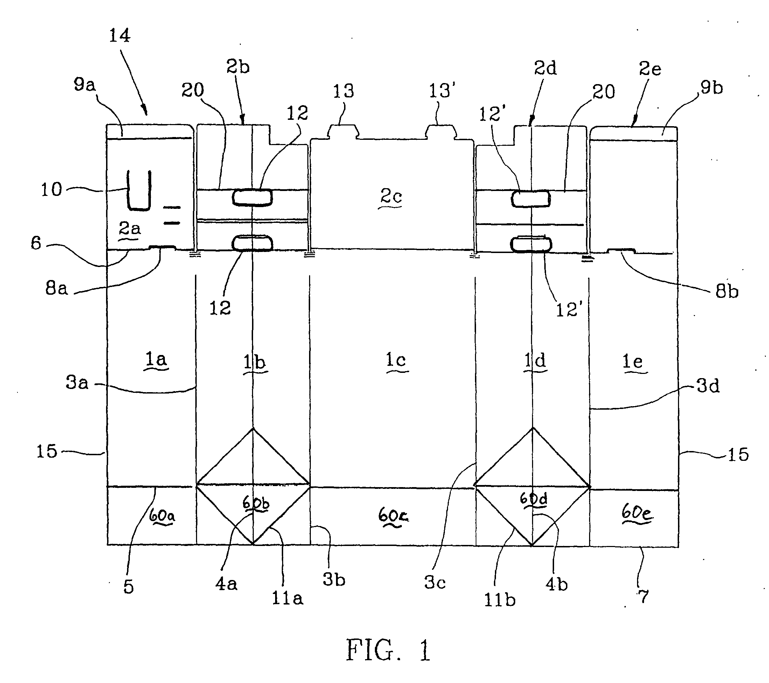

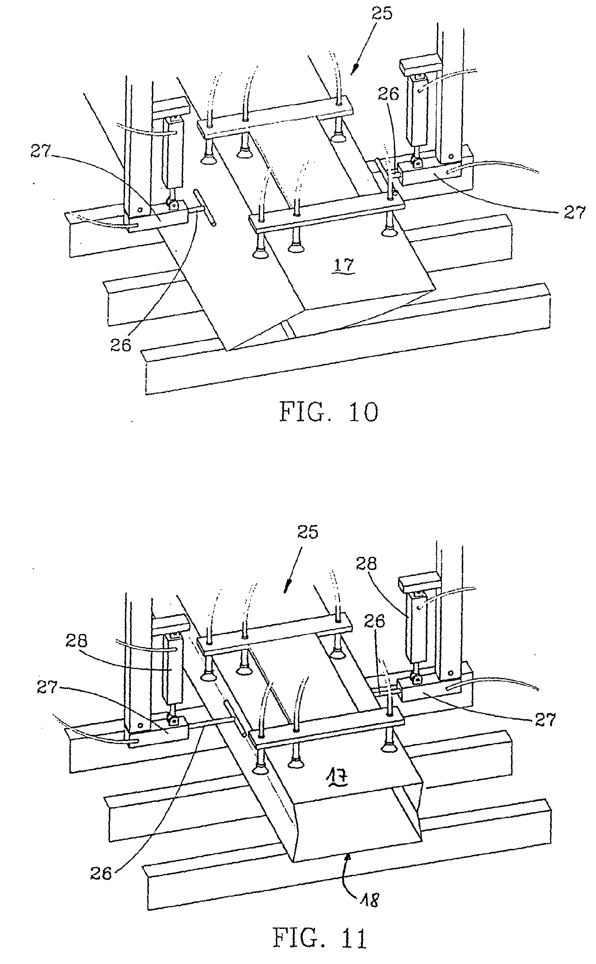

Zunächst werden die Form einer Ausgangsplatte bzw. eines Zuschnitts aus thermoplastischem Material und die verschiedenen zur Herstellung des Behälters erforderlichen Schritte beschrieben (Figuren 1 bis 9). Erst später wird unter Bezugnahme auf die schematischen Figuren 10 bis 20 die Herstellung in der Anlage beschrieben.

Fig.1 zeigt einen Zuschnitt 14 aus thermoplastischem Material mit wabenartiger Stegplattenstruktur, der aus einem einzigen Stück besteht, in den Falz und Stanzlinien eingebracht wurden und der zu einem Behälter verarbeitet wird.

Der Zuschnitt 14 weist fünf untere rechteckige Bereiche 1a, 1b, 1c, 1d, 1e auf, fünf im wesentlichen rechteckige obere Bereiche 2a, 2b, 2c, 2d, 2e, vier Falzlinien in Längsrichtung 3a, 3b, 3c, 3d, die die Bereiche 1a bis 1e voneinander trennen, zwei Falzlinien in Längsrichtung 4a, 4b, die sich senkrecht über die ganze Höhe des Zuschnitts 14 erstrecken und symmetrisch zu den Bereichen 1b, 1d und 2b, 2d angeordnet sind, eine waagerechte Falzlinie 5, die nahe des unteren Randes 7 (Schnittlinie) des Zuschnitts 14 alle unteren rechteckigen Bereiche 1a bis 1e durchquert, und eine waagerechte Falzlinie 6, die die oberen Bereiche 2a bis 2e von den unteren Bereichen 1a bis 1e trennt.

Die rechteckigen Bereiche 1a, 1b, 1c, 1d, 1e weisen dabei jeweils einen rechteckigen Endabschnitt 60a, 60b, 60c, 60d, 60e auf, der durch die Falzlinie 5 und den unteren Rand 7 begrenzt ist. Die Endabschnitte 60a-e formen später den Boden des Behälters, wogegen die oberhalb der Falzlinie 5 liegenden Teile der rechteckigen Bereiche 1a-e die BehälterSeitenwände bilden. Die Höhe der Endabschnitte 60a-e ist etwas größer als die halbe Breite der rechteckigen Bereiche 1b und 1c.

Die waagerechte Falzlinie 6 ist nicht durchgehend, da sie von Schnittlinien (Stanzlinien) begrenzter Länge 8a, 8b unterbrochen wird.

Die seitlich gelegenen Bereiche 2a und 2e der rechteckigen oberen Bereiche weisen Flügel 9a, 9b auf, die jeweils von in Fig. 1 gezeigten Falzlinien gebildet werden. Eine U-förmige Schnittlinie dient zur Bildung einer U-förmigen Lasche 10, die ein (nicht gezeigtes) Nylonschnürchen festhält, das dazu dient, einen Beutel zu verschließen, der vom Behälter aufzunehmende Abfälle enthält. Überdies sind die rechteckigen oberen Bereiche 2a bis 2e durch Schnittlinien voneinander getrennt, die durch senkrecht verlaufende Doppellinien in Fig.1 dargestellt sind.

Im unteren Teil enthält der Zuschnitt 14 zwei im Quadrat verlaufende Falzlinien 11a, 11b, die in den rechteckigen Bereichen 1b und 1d liegen.

Der Bereich 2b weist zwei waagrechte Durchbrüche 12 und der Bereich 2d zwei waagrechte Durchbrüche 12' auf, die jeweils gleiche Form und gleiche Abmessungen haben. Zwischen den beiden Durchbrüchen 12 und den beiden Durchbrüchen 12' befinden sich jeweils zwei waagrechte Doppelfalzlinien, d.h. jeweils zwei nebeneinanderliegende waagrechte Falzlinienpaare, die zusammen mit den Durchbrüchen 12, 12' zur Bildung von zwei Handgriffe des Behälters dienen, wie später noch erläutert wird.

Der mittlere obere rechteckige Bereich 2c, der später ein oberes Verschlußelement des Behälters bildet, weist zwei Laschen 13, 13' auf, deren Aufgabe es ist - wie sich aus der nachfolgenden Beschreibung ergibt - das Verschlußelement 2c in einer Schließstellung festzulegen.

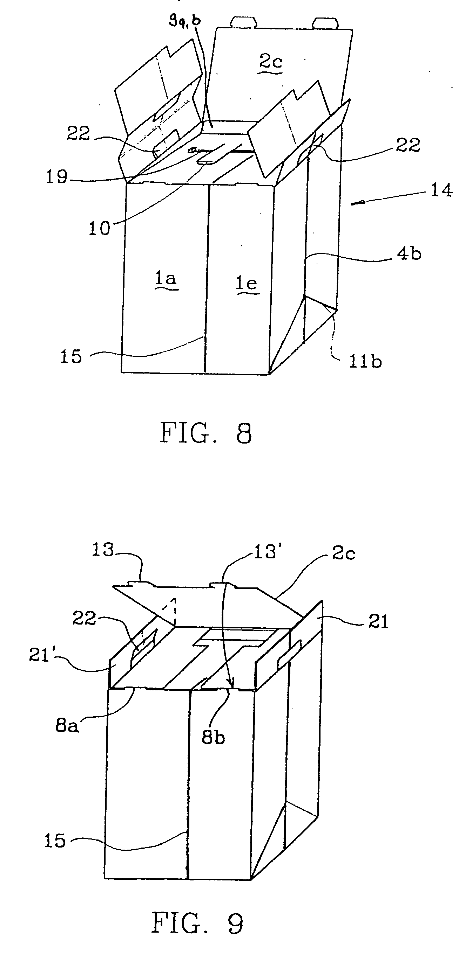

Im Folgenden wird das Verfahren, nach dem der Behälter ausgehend vom Zuschnitt 14 aus thermoplastischem Material hergestellt wird, unter Bezug auf "eine Anlage zum Falzen und Schweißen in Längsrichtung" und "eine Anlage zum Falzen und Schweißen des Bodens" geschildert, die alle diesbezüglichen Falz- und Schweißvorgänge automatisch besorgen, so daß der Behälter verpackungs und auslieferungsbereit ist. Später, beim Gebrauch, wird er durch entsprechende Handhabung in die in den Figuren 8 und 9 gezeigte dreidimensionale parallelepipedische Form gebracht.

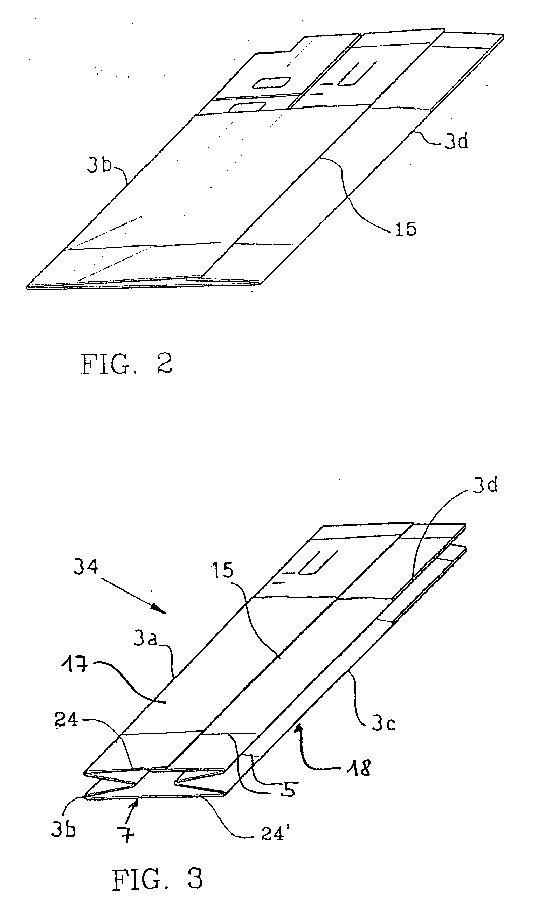

Zuerst wird der Zuschnitt 14 aus einem Stapel automatisch entnommen und in einer Vorschubphase in der Anlage für das Falzen und Verschweißen in Längsrichtung zur Ausbildung der Längsrichtung verlaufenden Falzlinien 3b und 3d automatisch gefalzt, wobei die seitlich in Längsrichtung verlaufenden Ränder (oder Enden) 15 wie in Fig. 2 gezeigt zum Überlappen gebracht werden.

Im Schweißaggregat der Anlage für das Schweißen in Längsrichtung (Vorrichtungen zum Falzen und Schweißen in Längsrichtung sind an sich bekannt) werden die Ränder 15 während gleichzeitigem Vorschub des Zuschnitts 14 verschweißt, wobei zwei (bezogen auf die in Längsrichtung verlaufende Schweißlinie bzw. -naht der Ränder 15) seitliche Niederhalterollen und eine einer Gebläsedüse nachgeordnete Druckrolle vorgesehen sind. Die Gebläsedüse bläst Heißluft zwischen die beiden Ränder 15 ein und erwärmt diese dadurch. Die Niederhalterollen verhindern, daß sich der Zuschnitt 14 während des Längsvorschubs, d.h. in Richtung der von den Rändern 15 gebildeten Schweißnaht, in Querrichtung bewegen kann. Jeder Zuschnitt 14 hat dann die in Fig. 2 gezeigte Form, die einem "röhrenförmigen" Halbfabrikat entspricht. Die Halbfabrikate werden gestapelt.

Anschließend wird einem Stapel mit Halbfabrikaten, die die in Fig.2 gezeigte Gestalt haben, in der Anlage für das Falzen und Verschweißen des Bodens ein Stück, beispielsweise durch einen Saugköpfe tragenden Wagen entnommen, und ein Förderband transportiert das Halbfabrikat bis zu einem Aggregat für faltenbalgartiges Falzen (vgl. Figuren 10, 11, 12), die das Halbfabrikat längs seiner Längslinien 3a, 4a, 3b, 3c, 4b, 3d durch die Einwirkung von Saugköpfen und Druckorganen falzt und zu der in Fig. 3 gezeigten Form zusammengelegt, die geeignet ist, um die Schweißung längs der Linie 16 und damit die Verschweißung des Bodens vornehmen zu können.

Dabei ist der Zuschnitt 14 dann so zu einem zusammengelegten Zuschnitt 34 gefaltet, daß die Seitenwände bildenden rechteckigen Bereiche 1c und 1e, 1a aufeinanderliegen und die rechteckigen Bereiche 1b und 1d vermöge der Falzlinien 3a, 4a, 3b und 3c, 4b, 3d zwischen die aufeinanderliegenden Bereiche 1c und 1e1a einstehend eingeschlagen sind.

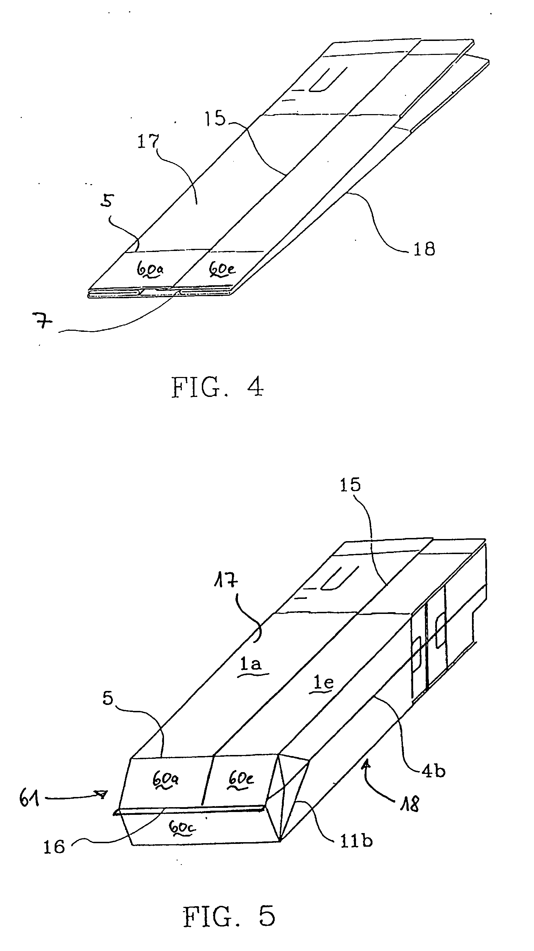

Somit bilden die Enden 24 und 24' der rechteckigen Bereiche 1c, 1e1a zusammen mit den Enden der eingeschlagenen Bereiche 1b und 1d eine faltenbalgartige Schnittlinie an der nun eine Schweißnaht 16 ausgebildet wird. Dazu wird der zusammengelegte Zuschnitt 34 an gegenüberliegenden Oberflächen 17 und 18, die von den Bereichen 1a, 1e1c gebildet werden, in seinem Endbereich, d.h. im Bereich der Endabschnitte 60a-e, zusammengepreßt (Fig. 4) und entlang eines streifenförmigen Bereiches verschweißt, der an den Rand 7 der Endabschnitte 60a-e des Zuschnittes angrenzt. Durch diese Verschweißung sind die Endabschnitte 60a-e des zusammengelegten Zuschnitts 34 verbunden.

Die Weise, in der die Verschweißung des Bodens erfolgt, wird später beschrieben, da sie die von einem aus dem Zuschnitt 14 erhaltenen Behälter gebotenen Vorteile klar aufzeigt.

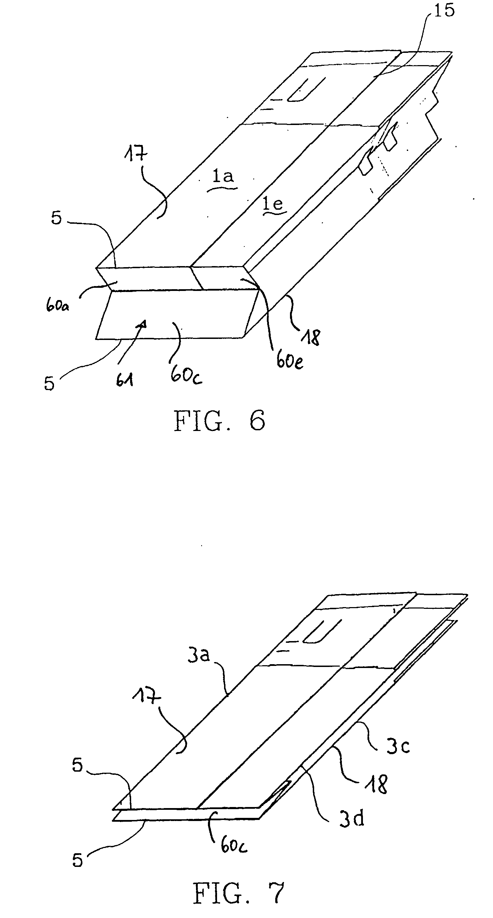

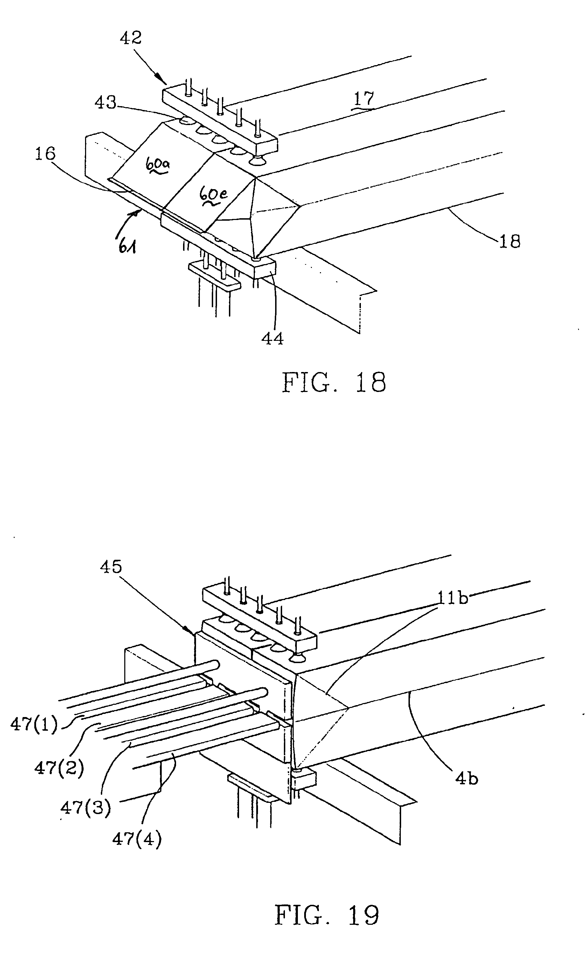

Nach dem durch Ausbilden der Schweißnaht 16 im streifenförmigen Bereich erfolgten Verschweißen des Bodens sorgt, wie in den nachfolgenden Schritten der Figuren 5, 6, 7 gezeigt, ein Falzaggregat, das Bestandteil der Anlage für das Falzen und Verschweißen des Bodens ist, für das Verbringen in eine versandgünstige Form, auch als "Verpacken" bezeichnet (Figuren 18, 19, 20, 21). Dabei wird der nun am Boden verschweißte Behälter "geöffnet", indem mit Saugköpfen auf die einander gegenüberliegenden Oberflächen 17, 18 eingewirkt und gleichzeitig auf die Schweißnaht 16 des Bodens 61 mittels eines nachfolgend beschriebenen Druckorgans Druck in Richtung auf das Behälterinnere ausgeübt wird. Dadurch werden die den Boden 61 bildenden, an der Schweißnaht 16 verbunden Endabschnitte 60a-e gegenüber den Oberflächen 17, 18 verschwenkt. Auf diese Weise wird erreicht, daß der Behälter nacheinander die in den Figuren 5, 6, 7 gezeigten Formen annimmt, bis er die in Fig. 7 gezeigte, für den Versand geeignete Gestalt erreicht hat.

Es sei angemerkt, daß beim Durchlaufen der Phasen der Figuren 5, 6, 7 auch die Falzlinien in Form eines Quadrats 11a, 11b genutzt werden, die es ermöglichen den Boden 61 nach innen zwischen die Oberfläche 17 und 18 einzuschlagen.

Damit der Benutzer den Behälter ausgehend von der Form der Fig. 7, in der er ausgeliefert wird, verwenden kann, muß er im wesentlichen die Schritte der Figuren 5, 6, 7 in umgekehrter Reihenfolge ausführen, indem er den Behälter von Hand "öffnet", bis die Gestalt der Fig. 8 erreicht ist. Dann kann eine (nicht dargestellte) Abfalltüte in den Behälter eingelegt und mittels eines Nylonschnürchens 19 verschlossen werden, das aus der diesbezüglich als Halterung dienenden U-förmigen Lasche 10 (Fig. 1 und 8) entnehmbar ist.

Zum Schließen des Behälters werden zuerst die beiden Bereiche 2a, 2e, die nach dem Verschweißen in Längsrichtung längs der Ränder 15 ein einziges Stück bilden, und dann die beiden Bereiche 2b, 2d (in der in Fig. 8 gezeigten Weise) nach innen entlang der waagerechten doppelten Falzlinien sowie der Falzlinien 6 umgebogen. Dann wird, wie in Fig. 9 zu sehen ist, der Bereich 2c auf die sich wie in Fig. 9 angegeben überlappenden Materialschichten geklappt. Um das Verschlußelement 2c festzulegen, werden die beiden Laschen 13, 13' in die Schlitze 8a, 8b eingesteckt.

Um das Erfassen der Handgriffe 21, 21' (Fig. 9) bequemer zu machen, bilden vorzugsweise die in Fig. 1 gezeigten Durchbrüche 12, 12' ausziehbare Laschen 22 aus. Mit anderen Worten, die unteren Durchbrüche 12, 12' müssen nicht notwendigerweise von einer geschlossenen Stanzlinie gebildet werden, sondern können eine von einer Falzlinie unterbrochene Stanzlinie enthalten (wie die Doppellinie in Fig. 1 zeigt), so daß zwei aus dem jeweiligen unteren Durchbruch 12 bzw. 12' ausklappbare Laschen 22 gebildet sind. Die Laschen 22 werden durch die vorher miteinander zur Deckung gebrachten Durchbrüche 12, 12 und 12', 12' nach außen geklappt, wie in Fig. 9 dargestellt. Dies macht den Griff bequemer und stabiler.

Wie in Fig. 8 zu erkennen, dienen die beiden Flügel 9a, 9b, die jetzt nach dem Verschweißen längs der Randstreifen 15 einen einzigen Flügel bilden, als Auflage für die Innenseite des oberen Verschlußelements 2c.

Es wird nun die Herstellung des in den Figuren 1 bis 9 gezeigten Behälters im einzelnen beschrieben.

Wie in den Figuren 10, 11 und 12 zu sehen ist, wird das von der Anlage für das Falzen und Verschweißen in Längsrichtung kommende, "röhrenförmige" Halbfabrikat durch einen in senkrechter Richtung beweglichen, Saugköpfe tragenden Wagen 25 und durch in Höhe der Förderbänder (zwischen diesen) fest angebrachte Saugköpfe "geöffnet", indem auf die gegenüberliegenden Oberflächen 17, 18 eingewirkt wird (Fig. 10 und 11). Fast gleichzeitig werden zur Erzielung der faltenbalgartigen Falzung die Stangen 26, 26 der Druckluftzylinder 27, 27 in waagerechter Richtung ausgefahren, wobei diese Stangen als Druckorgane wirken (Fig. 11).

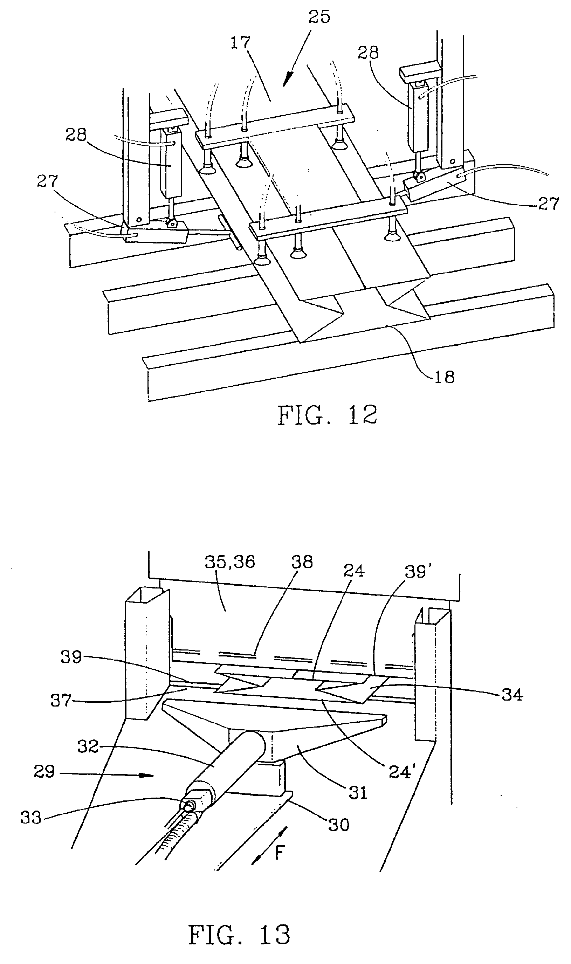

Der nächste Schritt ist schematisch in Fig. 12 dargestellt, in der zu erkennen ist, daß zwei senkrecht angeordnete Druckluftzylinder 28, 28 die oben erwähnten Druckluftzylinder 27, 27 in eine geneigte Stellung (beispielsweise mit einer Neigung von 45° gegenüber der Horizontalen) verbringen, nachdem die Stangen 26, 26 zuvor eingefahren wurden. Auf diese Weise lösen sich die Stangen oder seitlichen Druckorgane 26, 26 durch die Einzugsbewegung vollständig von den Wänden des künftigen Behälters, und gleichzeitig kann der in senkrechter Richtung bewegliche, die Saugköpfe tragende Wagen 25 so weit abgesenkt werden, bis das "röhrenförmige" Halbfabrikat die flache faltenbalgartige, in Fig. 3 gezeigte Form des zusammengelegten Zuschnitts 34 annimmt.

Anschließend wird das Halbfabrikat von Förderbändern zu der schematisch in den Figuren 13 bis 17 gezeigten Vorrichtung für das Schweißen des Bodens verbracht, die eine Schweißvorrichtung aufweist.

Die Schweißvorrichtung enthält ein Gebläse 29, das auf einem Wagen 30 angebracht ist, der vorwärts und rückwärts verfahrbar ist (vgl. Doppelpfeil F in Fig. 13). Das Gebläse 29 weist eine Düse 31, die sich ausgehend von einem Heißluft-Zuführungsrohr 32 trichterförmig aufweitet und in einen Austrittspakt mündet, und ein Potentiometer 33 zur Einstellung eines elektrischen Stroms auf, der einen nicht dargestellten innenliegenden Widerstand durchfließt.

Im Inneren der Düse 31 befinden sich Einrichtungen zur möglichst gleichmäßigen Verteilung der aus dem Zuführungsrohr 32 zuströmenden Heißluft an den Austrittsspalt der Düse 31; die Einrichtungen können innenliegende Leitblechen (Deflektoren) in Verbindung mit Schraubenfedern umfassen (nicht dargestellt). In der vorliegenden Ausführungsform werden zwei Gebläse eingesetzt, d.h. zwei parallele Düsen und dazugehörige Heißluft-Zuführungsrohre mit entsprechenden Wagen 30. Dies ist zur Vereinfachung in den Figuren allerdings nicht gezeigt. Da die Düsen in der gleichen Weise arbeiten, beschränkt sich die nachfolgende Beschreibung auf eine einzige Düse.

Auf diese Weise ist es möglich, in einem einzigen Arbeitszyklus die Enden 24, 24' zweier röhrenförmiger Halbfabrikate zu verschweißen (Fig. 3), wobei dennoch nur ein einziger Gebläsemotor mit dazugehörigem Lüfterrad erforderlich ist, der ein Paar von sich zu den jeweiligen Düsen 31 verzweigenden Zuführungsrohren speist.

In Fig. 13 ist der Zustand nach einer ersten Phase der Bodenverschweißung gezeigt. Dabei ist der zusammengelegte Zuschnitt 34 als Halbfabrikat zwischen zwei Schieber 35, 36 (Metallplatten) eingeschoben, die senkrecht dazu bewegbar sind. Das Einführen erfolgt mittels einer (nicht dargestellten) Positioniereinrichtung, die sich auf der dem Gebläse 29 abgewandten Seite der Schieber 35, 36 befindet. Die Positioniereinrichtung bewegt das Halbfabrikat im rechten Winkel zur Vorschubrichtung der Förderbänder.

Die beiden Schieber 35, 36 wirken in den nachfolgenden Arbeitsschritten mit einem als feste Gegenplatte dienenden, festen unteren Schieber 37 zusammen und können mit ihren Unterkanten 39, 39' das Halbfabrikat auf die Gegenplatte drücken. Dabei dient, wie noch erläutert werden wird, der Schieber 35 als Halteschieber und der zwischen Schieber 35 und Gebläse 32 liegende Schieber 36 als Press- und Abkühlschieber. In allen Schiebern 35, 36, 37 sind in der Nähe ihrer waagerechten Arbeitskanten 39, 39' innenliegende Kanäle 38 für einen Kühlmitteldurchlauf vorgesehen, und an den Enden der innenliegenden Kanäle 38 befinden sich Schläuche und dazugehörige Anschlußnippel. In Fig. 13 (Ende der ersten Phase) sind beide Schieber 35, 36 angehoben, weshalb der metallische Halteschieber 35, der vollständig vom davorliegenden, dazu parallelen Schieber 36 verdeckt wird, nicht sichtbar ist.

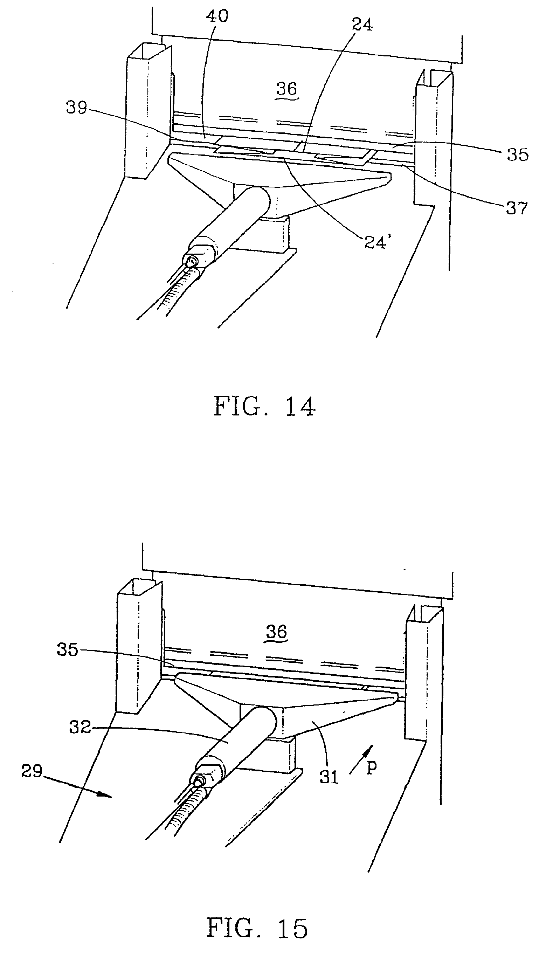

Nachdem das Halbfabrikat in der ersten Phase eingeschoben wurde, wird in einer zweiten, in Fig. 14 gezeigten Phase der Halteschieber 35 in Richtung auf die Oberkante des festen unteren Schiebers 37 abgesenkt, wodurch das faltenbalgartig gefaltete Halbfabrikat in einem verbleibenden Zwischenraum 40 eingezwängt wird. Dabei drückt nur der Halteschieber 35 auf das Halbfabrikat. Das Gebläse 29 befindet sich auf dem Wagen 30 noch in zurückgezogener Stellung, und der metallische Press- und Kühlschieber 36 ist noch angehoben (Anfangsstellung).

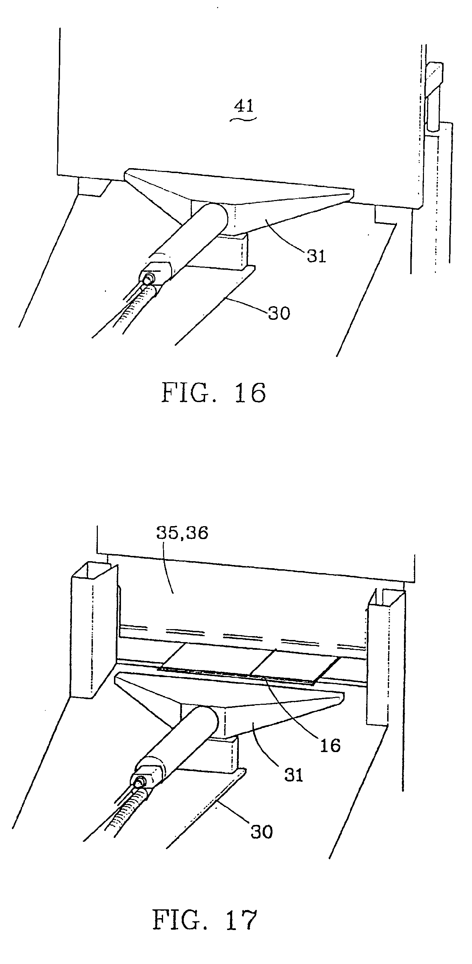

Im in Fig. 14 gezeigten Zustand ist der Schweißvorgang noch nicht in Gang, weil sich das Gebläse 29 noch in der eingefahrenen Stellung befindet und eine metallische Schutzeinrichtung 41, die vor der Heißluft-Düse 31 abgesenkt ist, wie dies in Fig. 16 gezeigt ist, das Halbfabrikat und die Schieber vor dem Heißluftstrom aus der Düse abschattet. Auf diese Weise ist es auch möglich, eine Überhitzung der Schieber 35, 36, 37 und anderer Teile der Vorrichtung für die Bodenverschweißung zu vermeiden. Zur besseren Erkennbarkeit ist die Schutzeinrichtung 41 aber in den Fig. 13 und 14 angehoben eingezeichnet.

Die Schutzeinrichtung 41 ist bis auf die während des eigentlichen Schweißvorgangs erfolgende Erhitzung des thermoplastischen Materials des Halbfabrikates (Aufwärmen der Ränder 24, 24') immer abgesenkt. Zur Erweichung der Ränder 24, 24' wird die Schutzeinrichtung 41 angehoben und Gebläse in Richtung des Pfeils F auf die Ränder 24, 24' hin bewegt, um sie aufzuheizen und das Material an der Linie der künftigen Schweißnaht 16 zum Schmelzen zu bringen. Dieser Verfahrensabschnitt ist in Fig. 15 gezeigt. Der sich hinter dem Schieber 36 befindliche Halteschieber 35 begrenzt dabei den Ausbreitungsbereich der aus der Düse 31 austretenden Heißluft und damit die Aufheizzone des thermoplastischen Materials sehr genau. Der Heißluftstrom, der sonst einen zu großen Bereich des Halbfabrikats aufheizen würde, wird durch den Halteschieber 35 auf den streifenförmigen Bereich, in dem die Schweißnaht 16 ausgebildet werden soll, begrenzt. Der Schieber 35 bewirkt auch eine leichte Spreizung oder Aufbiegung der zu verschweißenden Ränder 24, 24', die einen Eintritt von Heißluft auch zwischen diese beiden Rändern 24, 24' ermöglicht und dadurch die Schweißung verbessert.

Daran schließt sich eine Abkühlphase (Fig. 16) an, in den das Gebläse 29 zurückfährt und die Schutzeinrichtung 41 sich automatisch absenkt; gleichzeitig wird auch der Press- und Kühlschieber 36 abgesenkt, der dadurch das nun erweichte Material zusammendrückt und abkühlt. Diese abgesenkte Stellung der beiden Schieber 35, 36 ist in Fig. 16 nicht sichtbar, da sie von der Schutzeinrichtung 41 verdeckt werden.

Als Abschluß des Schweißvorgangs, der in Fig. 17 gezeigt ist, werden bei abgesenkter Schutzeinrichtung 41 (auch wenn dies in Fig. 17 nicht dargestellt ist, um die Zeichnung verständlich zu machen) die beiden beweglichen Schieber 35, 36 automatisch angehoben. Nunmehr ist der Boden längs der Schweißnaht 16 verschweißt.

Die Positioniereinrichtung sichert in der Anfangsphase Fig. 13 eine zuverlässige Schweißung des "röhrenförmigen" Halbfabrikats. Anschließend verbringt sie (durch die Einwirkung von nicht dargestellten Zangen) das am Boden verschweißte Teil in eine Mittellage auf den Förderbändern. Alle beschriebenen Bewegungen erfolgen automatisch, und es sind Endschalter-Sensoren für die Positioniereinrichtung, Photozellen für das Anhalten der Förderbänder, wenn das Teil bei der Schweißvorrichtung eintrifft, automatisch gesteuerte Druckluftkolben zum Absenken der Bauteile 35, 36, 41 usw. vorgesehen.

Die Schutzeinrichtung 41 ermöglicht ein kontinuierliches Arbeiten, da sonst die thermische Trägheit des Gebläses die Zykluszeiten in unerträglichem Maß verlängern würde. Das Gebläse kann beispielsweise folgende Daten haben: Luftdurchsatz zwischen 60 - 70 m³/h und (Lufttemperatur) zwischen 300 - 350 °C.

Diese Werte erlauben eine Herstellung der Schweißnähte ohne ein Risiko, das Material zu schädigen. Dabei erlaubt es die beschriebene Anordnung der Schieber, gegenüber herkömmlichen Verfahren den Luftdurchsatz zu erhöhen und die Temperatur T abzusenken (eine zu hohe Temperatur T ist für das thermoplastische Material schädlich) und dennoch eine einwandfreie Verschweißung durchzuführen.

Die Schweißzeiten können beispielsweise wie folgt gewählt werden: Aufheizzeit für das thermoplastische Material: 5-6 Sekunden; Abkühlzeit für das thermoplastische Material: 2-3 Sekunden.

Nach dem Schweißen des Bodens gelangt das damit vollständig geschweißte Teil in eine weitere Falzstation (Figuren 18 bis 21), die den Behälter in eine versandgünstige Form faltet. Die Falzstation verfügt dazu über einen in vertikaler Richtung beweglichen, Saugköpfe 43 tragenden Wagen 42, der durch die Saugköpfe 43 zusammen mit einer Vielzahl von festen unteren Saugköpfen 44 in der Weise wirkt, daß die beiden Oberflächen 17, 18 voneinander abgehoben und getrennt werden, so daß das verschweißte Teil die in Fig. 5 gezeigte Form annimmt. Die festen unteren Saugköpfe 44 sind dabei im wesentlichen auf dem Niveau der Förderbänder angeordnet, die das verschweißte Teil im rechten Winkel zu seiner Längsachse fortbewegen.

Dann übt ein Schuborgan 45 in Form einer senkrechten, mit Durchbrüchen versehenen Platte auf den Boden 61 Druck aus und schiebt ihn so in ebene Form, wobei das Schuborgan 45 auf einem Wagen angeordnet ist, der quer zur Vorschubrichtung des inzwischen stillstehenden Teils beweglich ist. Fig. 19 zeigt die ausgefahrene Stellung des Schuborgans 45, in der der Boden 61 des Behälters eben ist.

Diese Gestalt ist jedoch offensichtlich nicht zum Versand geeignet. Deshalb sind weitere Einrichtungen vorgesehen, die es ermöglichen, den Behälter, wie in Fig. 7 gezeigt zusammenzulegen, um einen für den Transport und die Auslieferung von Behältern geeigneten Zustand zu erreichen.

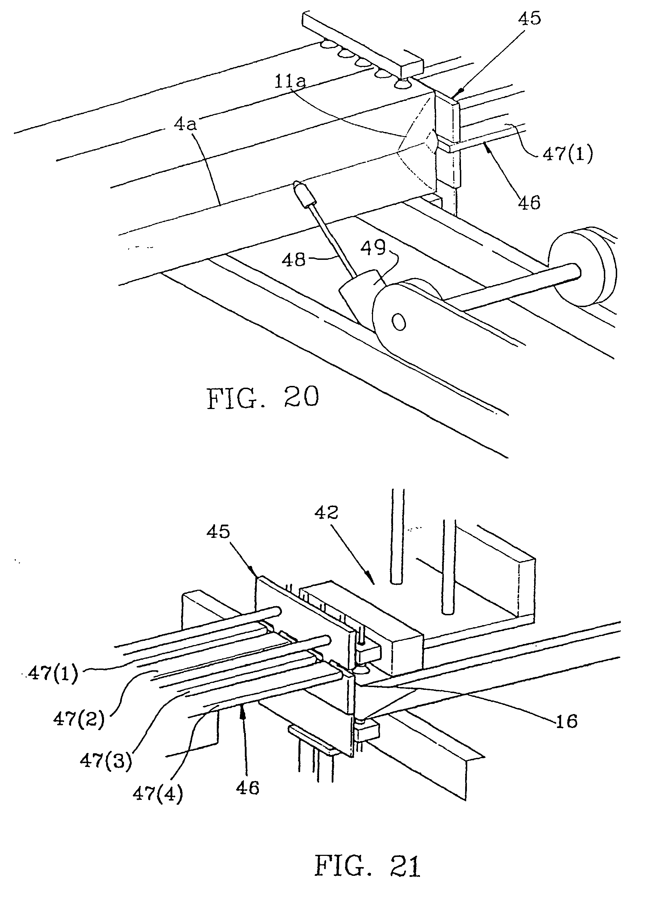

Dabei wird eingesetzt eine waagerechte Schubeinrichtung 46, die vier flache Stangen 47(1) bis 47(4) aufweist, die es ermöglichen, die Schweißnaht 16 bezogen auf den Behälter nach innen zu schieben, indem sie komplementär geformte Durchbrüche des Schuborgans 45 dann durchsetzen, wenn dieses am Ende seiner Schubbewegung angelangt ist (Fig.19), und auf die Schweißlinie 16 drücken. Nach dem Zurückfahren der Schubeinrichtung 46 wird der in vertikaler Richtung bewegliche Wagen 42 sofort abgesenkt, wobei zugleich das Schuborgan 45 in der ausgefahrenen Stellung verbleibt (Fig. 21). Dadurch wird der Behälter wieder flach zusammengelegt; nun jedoch mit nach innen eingeschlagenem Behälterboden

Schräg ausgerichtete Stößel 48, die von ebenfalls schräg angeordneten Druckluftzylindern 49 betätigt werden, sind auf beiden Seiten des Behälters (also nicht nur auf der in Fig. 20 gezeigten Seite) vorgesehen und unterhalb der Förderbänder angebracht. Die Stößel 48 wirken in der in Fig. 20 dargestellten ausgefahrenen Stellung auf die Falzlinien 4a, 4b der Seitenwände 1b, 1d des Behälters in der Weise ein, daß sie, wenn dieser von dem die Saugköpfe tragenden Wagen 42 zusammengelegt wird (Fig. 21), auch längs der quadratisch ausgebildeten Falzlinien 11a, 11b sauber gefalzt werden. Selbstverständlich wirken die schräg angeordneten Stößel 48 nur kurzzeitig und werden eingefahren, bevor sich der Wagen 42 ganz abgesenkt hat.

Es sei bemerkt, daß die Figuren 19 und 20 Ansichten von gegenüberliegenden Seitenwänden 1b und 1d des Behälters zeigen (vgl. Fig. 1). Sobald der Falzvorgang beendet ist (Fig. 21), ist der Behälter auslieferungsbereit und wird in dieser Gestalt am Austrag der Anlage entnommen.

## Patentansprüche

1. Zusammenlegbarer Behälter,
- der aus einem Zuschnitt (14) eines plattenförmigen Materials bestimmter Größe hergestellt ist,
- der im aufgeklappten Zustand eine quaderförmige Gestalt mit einem Boden (61) und vier Seitenwänden aufweist, die durch in den Zuschnitt (14) eingebrachte Falzlinien (3a, 3b, 3c, 3d, 5) gegeneinander abgegrenzt sind und an diesen miteinander zusammenhängen,
- wobei im zusammengelegten Zustand des Behälters zwei sich gegenüberliegende Seitenwände (1c; 1a, 1e) aufeinanderliegen und die diese verbindenden anderen beiden Seitenwände (1b, 1 d) hälftig eingeschlagen sind und in die aufeinanderliegenden Seitenwände (1c; 1a, 1e) einstehen, so daß sie nach innen klappbar sind, und
- wobei der Boden (61) des Behälters durch Endabschnitte (60a-e) der Seitenwände (1a-e) gebildet ist, die mit Falzlinien (5) gegenüber dem Rest der Seitenwände (1a-e) abgegrenzt sind und deren Höhe mindestens der halben Breite der eingeschlagenen Seitenwände (1a-e) entspricht,
**dadurch gekennzeichnet, daß**
- das Material thermoplastisch ist und
- der Boden (61) durch Wärmeverschweißen der Endabschnitte (60a-e) in einem streifenförmigen Bereich (16) erzeugt ist,
- wobei die Ränder der Endabschnitte (60a-e) der nach innen klappbaren Seitenwände eingeschlagen mitverschweißt sind und durch einen geraden Rand des Zuschnitts (14) gebildet sind.

2. Behälter nach Anspruch 1, bei dem die zwei beim zusammengelegten Zuschnitt (34) hälftig eingeschlagenen Seitenwände (1b; 1d) je eine Falzlinie (11a, 11b) aufweisen, die die Form eines Quadrats hat, das mit einer Spitze an den streifenförmigen Bereich (16) angrenzt und dessen Diagonallänge der Breite der eingeschlagenen Seitenwände (1 b; 1 d) entspricht.

3. Behälter nach einem der obigen Ansprüche, bei dem der Zuschnitt (14) zwei gegenüberliegende Längsränder (15) aufweist, die zur Herstellung des Behälters miteinander, vorzugsweise unter Überlappung des plattenförmigen Materials, verschweißt sind.

4. Behälter nach Anspruch 3, bei dem die verschweißten Längsränder (15) in einer der beiden Seitenwände (1c; 1a, 1e) angeordnet sind, die beim zusammengelegten Zuschnitt (34) aufeinanderliegend und zwischen denen die anderen beiden Seitenwände (1b, 1 d) eingeschlagen sind.

5. Behälter nach einem der obigen Ansprüche, bei dem der Zuschnitt (14) Bereiche (2a-e) aufweist, die den Endabschnitten (60a-e) gegenüberliegen und als Verschlußklappen des Behälters dienen.

6. Behälter nach Anspruch 5, bei dem zwei gegenüberliegende Verschlußklappen Falz- und Stanzlinien (12, 12') aufweisen, die es ermöglichen, die gegenüberliegenden Verschlußklappen zu einem Handgriffpaar zu falten, bei dem jeweils das plattenförmige Material zumindest doppelt liegt.

7. Verfahren zur Herstellung eines Behälters, der im aufgeklappten Zustand eine quaderförmige Gestalt mit einem Boden und vier Seitenwänden aufweist, die durch in den Zuschnitt eingebrachte Falzlinien gegeneinander abgegrenzt sind und an diesen miteinander zusammenhängen, wobei
- ein Zuschnitt bestimmter Größe eines plattenförmigen Materials so zusammengelegt wird, daß zwei sich gegenüberliegende Seitenwände aufeinanderliegen und die diese verbindenden anderen beiden Seitenwände hälftig eingeschlagen sind und in die aufeinanderliegenden Seitenwände einstehen, und
- der Boden des Behälters durch Endabschnitte der Seitenwände des zusammengelegten Zuschnitts gebildet wird, die mit Falzlinien gegenüber dem Rest der Seitenwände abgegrenzt sind und deren Höhe mindestens der halben Breite der eingeschlagenen Seitenwände entspricht,
**dadurch gekennzeichnet, daß**
- das Material thermoplastisch ist und
- zur Erzeugung eines dichten Bodens alle aufeinanderliegenden Seitenwände des zusammengelegten Zuschnitts entlang offener Ränder ihrer Endabschnitte in einem unmittelbar den Rändern benachbarten, streifenförmigen Bereich wärmeverschweißt werden,
- wobei die offenen Ränder der Endabschnitte durch einen geraden Rand des Zuschnitts gebildet sind und alle übereinanderliegenden Schichten der Endabschnitte wärmeverschweißt werden.

8. Verfahren nach Anspruch 7, bei dem zur Wärmeverschweißung der streifenförmige Bereich kontaktlos bis zur Erweichung erhitzt wird und dann gekühlt und gepreßt wird.

9. Verfahren nach Anspruch 8 bei dem während der Erhitzung der zusammengelegte Zuschnitt unmittelbar benachbart des streifenförmigen Bereichs eingespannt wird, so daß nur dieser Bereich erhitzt wird.

10. Verfahren nach einem der Ansprüche 8 oder 9, bei dem die Erhitzung mittels Heißluft erfolgt und das thermoplastische Material von der Heißluft abgeschirmt und nur während der Erhitzung der Heißluft ausgesetzt wird.

## Claims

1. Foldable container,
- which is manufactured from a blank (14) of a plate-shaped material having a determined size,
- said container, in the folded-out condition, having a right parallelepiped shape with a bottom (61) and four side walls, which are mutually delimited by folding lines (3a, 3b, 3c, 3d, 5) and are hinged to each other at these lines,
- wherein, in the folded condition of the container, two opposing side walls (1c; 1 a, 1 e) lie on top of each other and the other two side walls (1b, 1 d) connecting them are half folded-in between the side walls (1 c; 1 a, 1 e) lying on top of each other so as to be inwardly foldable, and
- wherein the bottom (61) of the container is formed by end portions (60a-e) of the side walls (1a-e) which are delimited with respect to the rest of the side walls (1a-e) by folding lines (5) and whose height corresponds to at least half the width of the folded side walls (1 a-e),
**characterized in that**
- the material is thermoplastic and
- the bottom (61) is produced by thermal welding of the end portions (60a-e) in a strip-shaped region (16),
- wherein the edges of the end portions (60a-e) of the inwardly foldable side walls are simultaneously welded in a folded condition and are formed by a straight edge of the blank (14).

2. Container according to claim 1, wherein the two side walls (1b; 1d) folded in half when the blank (34) is folded each comprise a folding line (11 a, 11 b) which has the shape of a square, one tip of which is adjacent to the strip-shaped region (16) and whose diagonal length corresponds to the width of the folded-in side walls (1 b; 1 d).

3. Container according to any one of the above claims, wherein the blank (14) comprises two opposite longitudinal edges (15) which are welded to each other, preferably by overlap of the plate-shaped material, for manufacture of the container.

4. Container according to claim 3, wherein the welded longitudinal edges (15) are arranged in one of the two side walls (1c; 1a, 1e) lying on top of each other when the blank (34) is folded and having the other two side walls (1 b, 1 d) folded-in between them.

5. Container according to any one of the above claims, wherein the blank (14) comprises regions (2a-e) which are located opposite the end portions (60a-e) and serve as closing flaps for the container.

6. Container according to claim 5, wherein the two opposite closing flaps comprise folding and punching lines (12, 12') which enable folding of the opposite closing flaps to form a pair of handles in which the plate-shaped material is arranged to have at least double thickness.

7. Method for manufacturing a container having a right parallelepiped shape in the folded out condition, comprising a bottom and four side walls which are mutually delimited by folding lines made in the blank and which are hinged to each other at said folding lines, wherein
- a blank of a determined size of a plate-shaped material is folded such that two opposite side walls are located on top of each other and the other two side walls connecting them are half-folded-in between the side walls located on top of each other, and
- the bottom of the container is formed by end portions of the side walls of the folded blank, which end portions are delimited relative to the rest of the side walls by folding lines and whose height corresponds to at least half the width of the folded in side walls,
**characterized in that**
- the material is thermoplastic and
- in order to generate a tight bottom, all side walls lying on top of each other in the folded blank are thermally welded along open edges of their end portions in a strip-shaped region immediately adjacent to said edges,
- wherein the open edges of the end portions are formed by a straight edge of the blank and all stacked layers of the end portions are thermally welded with each other.

8. Method according to claim 7, wherein the strip-shaped region is heated in a non-contacting manner until it softens and is then cooled and pressed for thermal welding.

9. Method according to claim 8, wherein, during heating, the folded blank is clamped immediately adjacent to the strip-shaped region such that only this region is heated.

10. Method according to any one of claims 8 or 9, wherein heating is effected by means of hot air and the thermal plastic material is shielded from said hot air and is exposed to said hot air only during heating.

## Revendications

1. Conteneur pliable,
- fabriqué à partir d'un flan (14) en un matériau en forme de plaque,
- qui présente, à l'état déployé, une forme de parallélépipède avec un fond (61) et quatre parois latérales, qui sont délimitées entre elles par des lignes de pliage (3a, 3b, 3c, 3d, 5) pratiquées dans le flan (14) et sont reliées entre elles à ces lignes,
- deux parois latérales opposées (1c ; 1a, 1e) se superposant à l'état replié du conteneur, et les deux autres parois latérales (1b, 1d) qui les relient étant rabattues par moitiés et s'insérant entre les parois latérales (1c ; 1a, 1e) superposées, de sorte qu'elles sont repliées vers l'intérieur, et
- le fond (61) du conteneur étant formé par des sections terminales (60a-e) des parois latérales (1a-e) qui sont limitées par des lignes de pliage (5) relativement au reste des parois latérales (1a-e) et dont la hauteur correspond au moins à la moitié de la largeur des parois latérales (1a-e) rabattues,
**caractérisé en ce que**
- le matériau est thermoplastique et
- le fond (61) est réalisé par soudure à chaud des sections terminales (60a-e) dans une zone rigide (16),
- les bords des sections terminales (60a-e) des parois latérales, rabattables vers l'intérieur, étant soudées ensemble rabattus et étant formés par un bord droit du flan (14). la largeur des parois latérales (1a-e) rabattues

2. Conteneur selon la revendication 1, dans lequel les deux parois latérales (1b, 1d) qui sont repliées par moitié lorsque le flan (34) est replié, présentent chacune une ligne de pliage (11a, 11b) ayant la forme d'un carré qui est contiguë par un sommet à la zone en forme de bande (16) et dont la longueur de la diagonale correspond à la largeur des parois latérales (1b; 1d) rabattues.

3. Conteneur selon l'une des revendications précédentes, dans lequel le flan (14) présente deux bords longitudinaux (15) opposés qui peuvent être soudés ensemble, de préférence avec recouvrement du matériau en forme de plaque, pour la fabrication du conteneur.

4. Conteneur selon la revendication 3, dans lequel les bords longitudinaux soudés (15) sont disposés dans l'une des deux parois latérales (1c ; 1a, 1e) qui sont superposées lorsque le flan (34) est replié et entre lesquelles les deux autres parois latérales (1b, 1d) sont rabattues.

5. Conteneur selon l'une des revendications précédentes, dans lequel le flan (15) présente des zones (2a-e) qui se situent à l'opposé des sections terminales (60a-e) et servent de rabat de fermeture pour le conteneur.

6. Conteneur selon la revendication 5, dans lequel deux rabats de fermeture opposés présentent des lignes de pliage et de découpe (12, 12') qui permettent de plier les rabats de fermeture opposés en une paire de poignées dans lesquelles le matériau en forme de plaque est au moins doublé chaque fois.

7. Procédé de fabrication d'un conteneur présentant à l'état déployé une forme de parallélépipède avec un fond et quatre parois latérales limités les uns par rapport aux autres par des lignes de pliage pratiquées dans le flan et se raccordant les uns aux autres par ces lignes, dans lequel
- un flan d'une dimension définie d'un matériau en forme de plaque est replié de telle manière que deux parois latérales opposées se superposent, et les deux autres parois latérales qui les relient sont rabattues par moitiés et s'insèrent dans les parois latérales superposées,
- le fond du conteneur est formé par des sections terminales des parois latérales du flan replié qui sont limitées par des lignes de pliage (5) relativement au reste des parois latérales (1a-e) et dont la hauteur correspond au moins à la moitié de la largeur des parois latérales rabattues,
**caractérisé en ce que**
- le matériau est thermoplastique et
- pour produire un fond étanche, toutes les parois latérales superposées du flan replié sont soudées à chaud le long des bords libres de leurs sections terminales dans une zone en forme de bande immédiatement voisine des bords,
- les bords libres des sections terminales étant formés par un bord droit du flan et toutes les couches superposées de sections terminales étant soudées à chaud.

8. Procédé selon la revendication 7 dans lequel pour souder à chaud les zones en forme de bande on chauffe sans contact jusqu'à ramollissement puis on refroidit et on compresse.

9. Procédé selon la revendication 8 dans lequel pendant le chauffage du flan replié, on effectue un serrage au voisinage immédiat de la zone en forme de bande, de sorte que seule cette zone soit chauffée.

10. Procédé selon l'une des revendications 8 et 9 dans lequel le chauffage s'effectue au moyen d'air très chaud et le matériau thermoplastique est protégé de l'air chaud et soumis à l'air chaud seulement pendant le chauffage.
